Europäisches Patentamt

European Patent Office

Office européen des brevets

(19)

(11) Veröffentlichungsnummer: **0 189 148**
**B1**

(12) # EUROPÄISCHE PATENTSCHRIFT

(45) Veröffentlichungstag der Patentschrift:
**19.04.89**

(21) Anmeldenummer: **86100609.6**

(22) Anmeldetag: **17.01.86**

(51) Int. Cl.⁴: **B 65 H  49/18,** B 65 H  57/18,
H 02 G  1/18

(54) Abwickelvorrichtung für in Rollenform vorliegendes Strangmaterial.

(30) Priorität: **19.01.85  DE 3501734**
**12.09.85  DE 8526057 U**

(43) Veröffentlichungstag der Anmeldung:
**30.07.86 Patentblatt 86/31**

(45) Bekanntmachung des Hinweises auf die Patenterteilung:
**19.04.89 Patentblatt 89/16**

(84) Benannte Vertragsstaaten:
**AT BE CH DE FR GB IT LI LU NL SE**

(56) Entgegenhaltungen:
**DE-U-6 610 635**
**DE-U-6 902 930**
**FR-A-2 188 590**
**FR-A-2 351 897**
**GB-A-1 003 735**
**US-A-1 543 121**
**US-A-1 839 321**
**US-A-3 837 597**

(73) Patentinhaber: **Strauss, Walter, Am Kirchbühl 9,
D-7995 Neukirch (DE)**

(72) Erfinder: **Strauss, Walter, Am Kirchbühl 9, D-7995
Neukirch (DE)**

(74) Vertreter: **Patentanwälte Dipl.- Ing. E. Eisele Dr.-
Ing. H. Otten, Seestrasse 42, D-7980 Ravensburg
(DE)**

LIBER, STOCKHOLM 1989

## Beschreibung

Die Erfindung betrifft eine Abwickelvorrichtung für in Rollenform vorliegendes Strangmaterial, insbesondere für isolierte elektrische Leitungen zur Gebäudeinstallation, bestehend aus einem Grundgestell, einem an diesem um eine vertikale Achse drehbar gelagerten Rollenträger und einer vorzugsweise mit einem Längenmeßwerk versehenen Abziehführung. Derartige auch Ringabwickler genannte Vorrichtungen dienen dem Elektroinstallateur dazu, insbesondere die in Rollen oder Ringen ohne Wickelkern angelieferten mehradrigen Leitungen und Kabel in einziehfertigen Abschnitten bestimmter Länge vorzubereiten oder unmittelbar vom Ring weg in Leitungsrohre einzuziehen.

Bei einem bekannten Ringabwickler ist die mit mehreren Führungsschlaufen versehene Abziehführung unmittelbar am Grundgestell befestigt. Sie läßt sich zwar nach Lösen einer Arretierungsschraube um eine vertikale Achse schwenken, um so ihre Längsachse je nach dem Durchmesser des Kabelringes in die tangentiale Richtung einstellen zu können. Wird jedoch bei dieser im Betrieb starren Abziehführung das Kabel in eine Richtung abgezogen, die von der durch die Längsachse der Abziehführung vorgegebenen Richtung abweicht, so wird das Kabel mit einem scharfen Knick um die Schlaufen oder die Enden der Abziehführung herumgezogen. Dadurch klemmt das Kabel und kann sowohl innerlich als auch äußerlich beschädigt werden. Bei starken Zugkräften kann sich auch die Winkeleinstellung der Abziehführung ändern. Dabei wird das Kabel ebenfalls gewaltsam "über die Ecke" geführt und beschädigt.

Der Erfindung liegt die Aufgabe zugrunde, eine Abwickelvorrichtung zu schaffen, die ein problemloses Abziehen des Kabels in jeder beliebigen horizontalen Richtung gestattet, ohne daß an der Vorrichtung etwas umgestellt werden muß und ohne die Gefahr von Beschädigungen des Kabels.

Diese Aufgabe wird ausgehend von einer Abwickelvorrichtung der einleitend bezeichneten Art erfindungsgemäß dadurch gelöst, daß die Abziehführung an einem um den Rollenträger herum beweglichen Schwenkgestell um eine vertikale Achse drehbar gelagert ist. Durch diese zweifache freie Drehbarkeit um 360° kann sich die Abziehführung dem tangential ausgespannten Kabel oder Leitungsdraht leichtläufig anpassen. Sie folgt diesem hinsichtlich des Kleinerwerdens des Kabelringes im Verlauf des Abwickelvorganges. Dazu dient das Lager am Schwenkgestell. Die Abziehführung folgt dem Kabel aber auch bei einer Änderung der horizontalen Abziehrichtung, wobei das Schwenkgestell mit umläuft. Das hat eine beträchtliche Vereinfachung des Arbeitsablaufes zur Folge, denn üblicherweise wird die Abwickelvorrichtung in einem zentralen Raum des betreffenden Stockwerks aufgestellt und dann werden die Leitungen je nach Lage der Leitungsrohröffnungen oder der abgehenden Türöffnungen und Gänge abgezogen.

Vorzugsweise ist das Schwenkgestell ein um die Achse des Rollenträgers frei drehbarer Arm, der auch höhenverstellbar sein kann. Die Höhenverstellbarkeit ist von besonderer Bedeutung, wenn der Rollenträger auch für die Aufnahme von Kabeltrommeln ausgebildet ist, die eine wesentlich größere axiale Höhe als einfache Kabelringe haben. Zum gleichen Zweck kann aber auch die Abziehführung bezüglich des Schwenkgestells höhenverstellbar sein, beispielsweise durch Versetzen der Lagerstelle, so daß man sich die für die betreffende Kabeltrommel günstigste Höhe aussuchen kann.

Um Kabeltrommeln aufnehmen zu können, wird vorgeschlagen, daß der Rollenträger ein Speichenrad ist, an dessen Speichen Haltedorne länsverschiebbar und in die Speichenradebene umklappbar angeordnet sind. Die Haltedorne werden also durch Umklappen aus dem Weg geräumt. Einer der Haltedorne hat oben vorzugsweise einen Drehgriff, z. B. eine drehbare Kugel, um zum Zurückspulen des Kabels den Rollenträger von Hand antreiben zu können.

Schließlich ist es für die Verwendbarkeit der Abwickelvorrichtung für Kabeltrommeln wichtig, im Betrieb dei Bremskraft der an sich bekannten Rollenträgerbremse einstellen zu können, wenn bei kleiner werdendem Durchmesser das Abzugsdrehmoment abnimmt. Hierzu wird vorgeschlagen, daß die Bremse für den Rollenträger ein zentral nach oben stehendes Spannorgan aufweist, das mittels eines durch die rohrartige Achse der Kabeltrommel einführbaren Steckwerkzeuges betätigt werden kann. Das Steckwerkzeug kann insbesondere ein wahlweise im Grundgestell verwendbares Standrohr sein.

Während die Grundgestelle von bekannten Abwickelvorrichtungen üblicherweise dreibeinig oder mit drei Aufstellpunkten ausgebildet sind, ergibt sich eine für die erfindungsgemäße Rundum-Abwickelvorrichtung besonders wichtige erhöhte Standfestigkeit des Grundgestells dadurch, daß dieses einen ringförmigen Standfuß aufweist.

Die Abziehführung ist vorzugsweise ein quer zu ihrer Achse stehendes Rohrstück oder dergleichen, dessen zu beiden Seiten der Achse liegende Abschnitte ungleich lang sind. Die Anordnung wird so getroffen, daß das Kabel in dem kürzeren Abschnitt eintritt und aus dem längeren Abschnitt austritt. Dadurch ergibt sich eine gute Selbstanpassung der Abziehführung an den jeweiligen Durchmesser der Rolle, welcher sich während des Arbeitens ändert. Auch das Längenmeßwerk, falls vorhanden, sollte in seiner Arbeitsrichtung dieser Laufrichtung des Kabels durch das Rohrstück entsprechen.

Vielfach besteht im Elektrohandwerk ein weiteres Problem. Die Monteure kommen von der Baustelle zurück und bringen Kabelringe, die zum Teil verbraucht worden sind, und man möchte nun zum Zwecke der Rechnungsstellung oder der Kontrolle des Materialverbrauchs wissen, wie groß die Restlänge dieser angebrauchten Rollen ist. Diese Frage kann üblicherweise nur dadurch genau beantwortet werden, daß man das Kabel von der Rolle abzieht, dabei die Länge mißt und anschließend wieder aufwickelt. Zum Abziehen und Messen könnte die beschriebene Abwickelvorrichtung verwendet werden.

Um jedoch die Mühe des Wiederaufwickelns zu vermeiden, wird vorgeschlagen, daß über dem Rollenträger ein vorzugsweise leicht abnehmbarer oberer Rollenträger achsgleich angeordnet ist und daß beide Rollenträger miteinander gekuppelt sind. Dieser Vorschlag ergänzt eine mit einem Meßwerk versehene Abwickelvorrichtung zu einem Gerät, mit dessen Hilfe die Länge eines zu einem Ring aufgerollten Kabels in einem einzigen Arbeitsvorgang durch Ab- und Aufrollen bestimmt werden kann.

Man legt die zu messende Kabelrolle auf den oberen Rollenträger, bildet mit dem Anfang des Kabels eine Schleife, wendet die Abziehvorrichtung um 180°, führt den Kabelanfang hindurch und befestigt ihn am unteren Rollenträger. Wenn man nun das Kabel vom oberen Rollenträger abzieht, wird der untere Rollenträger angetrieben und die abgezogene Kabellänge auf dem unteren Rollenträger laufend wieder aufgewickelt. Beim Wiederaufwickeln wird die Kabellänge gemessen, wobei jetzt der längere Abschnitt des Rohrstücks zum unteren Rollenträger hin weist. Die jetzt als "Aufroll"-Führung gebrauchte Abziehführung stellt sich wiederum selbst im richtigen Winkel ein. Zum Schluß steht das Kabel in aufgewickelter Form zur Verfügung. Das Ab- und Aufwickeln kann gleichzeitig von einer Person erledigt werden. Während des Arbeitens besteht eine Kabelschleife von einigen Metern, deren Länge sich ändert. Die Arbeit kann in einem verhältnismäßig kleinen Raum durchgeführt werden. Das Kabel wird geschont und liegt nicht ungeordnet herum.

Zweckmäßigerweise ist auch der obere Rollenträger als Speichenrad ausgebildet, das beispielsweise auf die Nabe des unteren Rollenträgers aufgesetzt wird. Dabei können die Haltedorne des unteren Rollenträgers, welche zum Zentrieren der Kabelrolle dienen, durch den oberen Rollenträger hindurch nach oben überstehen. Um diese überstehenden Enden der Haltedorne herum wird das Kabel aufgewickelt. Da die Speichen des oberen Rollenträgers an den Haltedornen anschlagen, ist eine drehfeste Mitnahmeverbindung zwischen den beiden Rollenträgern auf einfachste Weise geschaffen.

Bevorzugte Ausführungsbeispiele der Erfindung werden nachfolgend anhand der Zeichnung erläutert. Im einzelnen zeigt

Fig. 1 eine Seitenansicht einer zerlegbaren Horizontal-Abwickelvorrichtung,

Fig. 2 die Draufsicht der Vorrichtung nach Fig. 1,

Fig. 3 einen Teilschnitt der Nabe des Rollenträgers mit der Bremsvorrichtung,

Fig. 4 einen Querschnitt IV - IV einer Speiche des Rollenträgers mit einem Haltedorn in Ansicht,

Fig. 5 eine Seitenansicht einer ähnlichen, jedoch durch einen zweiten Rollenträger ergänzten Vorrichtung zum Ab- und Aufwickeln und Messen eines Kabelrings.

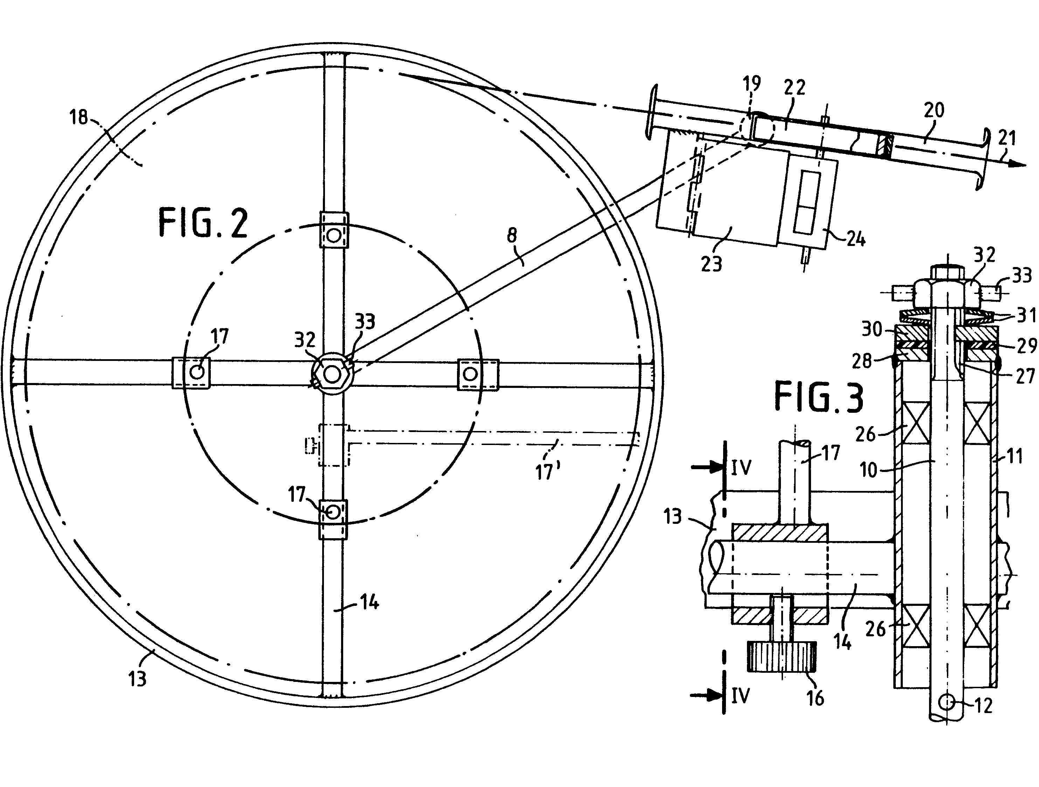

Nach Fig. 1 besteht das Grundgestell der Abwickelvorrichtung aus einem Ring 1 mit vier Speichen 2 und einer zentralen Einsteckhülse 3. Die Speichen 2 sind am Ring 1 so angebracht, daß dieser ein wenig nach unten übersteht. Bei großer Belastung der Einsteckhülse 3 geben die Speichen biegend nach, so daß das untere Ende der Hülse auf dem Boden aufsteht.

Die Einsteckhülse 3 nimmt ein Standrohr 4 auf, das sich mit einem Querzapfen 5 in eine entsprechende Ausnehmung am oberen Rand der Einsteckhülse 3 legt und dadurch drehfest ist. Das Standrohr 4 ist umgeben von einem Anschlagring 6, der mittels einer Klemmschraube befestigt ist, und von einer Hülse 7. Letztere ist mittels einer horizontalen Stange 8 mit einer weiteren vertikalen Hülse 9 verbunden. Diese drei Teile bilden einen um die Mittelachse der Abwickelvorrichtung frei drehbaren Schwenkarm.

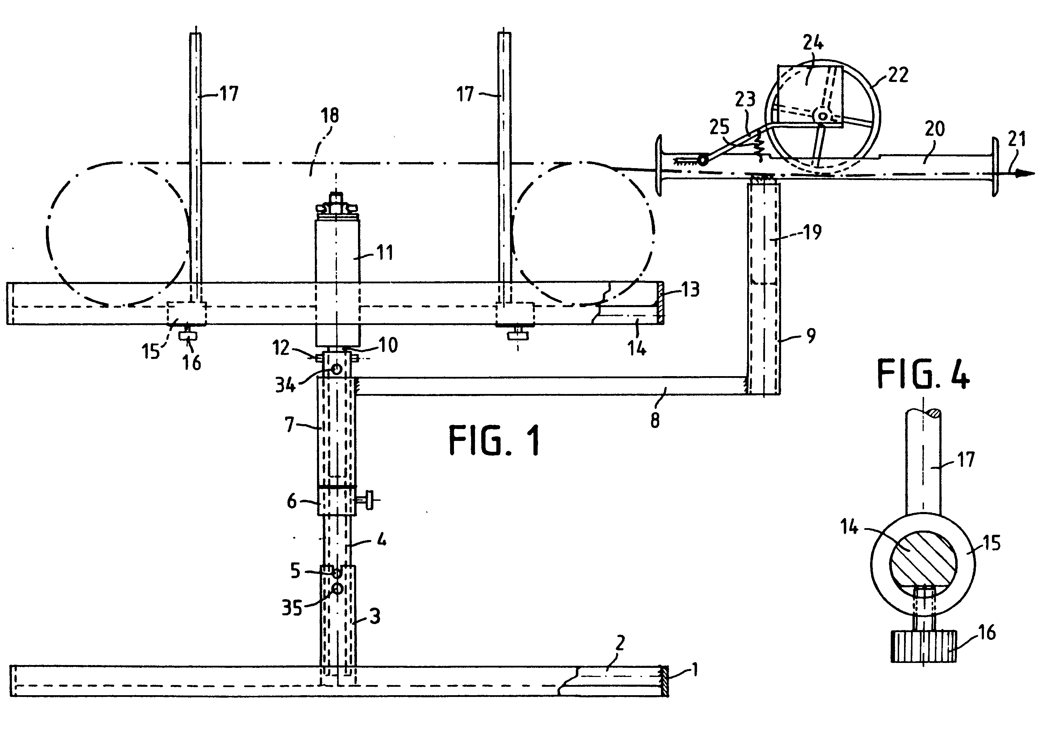

In das Standrohr 4 ist von oben her die Achse 10 der Nabe 11 des Rollenträgers eingesteckt. Ein Querzapfen 12 der Achse 10 legt sich in eine schlitzförmige Aussparung am oberen Ende des Standrohres 4 ähnlich wie der Querzapfen 5 in die entsprechende Aussparung in der Einsteckhülse 3 und ist dadurch drehfest gesichert. Der Rollenträger besteht aus einem Ring 13, dessen Speichen 14 so angeordnet sind, daß der Ring 13 nach oben etwa 2,5 cm übersteht. Das hat den Vorteil, daß Kabelwindungen, die sich infolge des Nachlaufs des Rollenträgers bei ruckartiger Unterbrechung des Kabelzuges eventuell bilden, nicht herabfallen können und den Rollenträger 13, 14 verstärkt abbremsen. Die Speichen 14 sind von rundem Querschnitt, jedoch an der Unterseite angeflacht, wie die Figuren 3 und 4 zeigen. An den Speichen 14 sind kurze Rohrstücke 15 dreh- und verschiebbar angebracht und in jeder Stellung mittels einer Klemmschraube 16 arretierbar. An den Rohrstücken 15 sind Haltedorne 17 radial angeschweißt. Sie dienen in der Arbeitsstellung nach Fig. 1 zur zentralen Halterung eines aufgelegten Kabelringes 18 (strichpunktiert angedeutet). Zum Aufladen einer Kabeltrommel oder beim Transport werden die Haltedorne 17 in die aus Fig. 2 ersichtliche Stellung 17' in die horizontale Ringebene umgeklappt. Dabei können sie sich auf nicht dargestellte, am Ring 13 angebrachte horizontale Auflagelappen legen. Jedenfalls verschwinden die Haltedorne in dem scheibenförmigen Innenraum des Ringes 13.

Die Figuren 1 und 2 zeigen ferner eine Abziehführung, deren Besonderheit darin besteht, daß sie mittels eines vertikalen Drehzapfens 19 in die Hülse 9 des Schwenkarms eingesteckt ist und sich darin rundum frei drehen kann. An dem Drehzapfen 19 ist ein rechteckiges Führungsrohr 20 angeschweißt, und zwar so, daß etwa 1/3 seiner Länge zum Rollenträger hin und etwa 2/3 seiner Länge vom Rollenträger weg weisen. Diese Bemessung ist erfahrungsgemäß besonders zweckmäßig und garantiert eine einwandfreie Selbsteinstellung des Führungsrohres 20, ohne daß das Kabel 21 geknickt wird. Die Enden des Führungsrohres 20 sind trompetenartig ausgerundet. Durch eine obere Öffnung greift das Reibrad 22 eines Längenmeßwerks in das Führungsrohr 20 ein. Auf einer an der Seite des Führungsrohrs 20 scharnierartig gelagerten Platte 23 ist ein Zählwerk 24 befestigt, das von dem Reibrad 22 angetrieben wird. Eine Zugfeder 25 sorgt für zusätzlichen Auflagedruck des Reibrades 22. Am Führungsrohr 20 kann zusätzlich eine Auflageplatte für einen Schreibblock oder Formularsatz zum Notieren der Meßwerte angebracht sein.

Fig. 3 zeigt, wie die Nabe 11 mittels zweier Lager 26 auf der Achse 10 gelagert ist, die an ihrem oberen Endabschnitt ein Außengewinde und eine Längsnut 27 aufweist. Die Nabe 11 ist oben mit einer eingeschweißten Scheibe 28 bündig abgeschlossen. Dann folgt eine lose Reibbelagscheibe 29 und dann eine Bremsscheibe 30, die mit einer Nase in die Längsnut 27 der Achse 10 eingreift und somit gegenüber dieser drehfest ist. Oben sind noch zwei Tellerfedern 31 aufgelegt. Diese Reibanordnung wird mittels einer Mutter 32 gespannt, an der zwei gegenüberliegende Zapfen 33 angebracht sind. Letztere dienen dazu, die Spannmutter betätigen zu können, auch wenn eine Kabeltrommel auf dem Rollenträger aufliegt. Man verwendet dann beispielsweise ein zusätzliches längeres Standrohr, dessen Randausschnitte in die Zapfen 33 passen, als Drehwerkzeug.

Die Figuren 3 und 4 zeigen im übrigen die Einzelheiten des Dreh- und Befestigungsmechanismus für die Haltedorne 17.

Im Beispiel läßt sich die Höhe der Abziehführung durch Verstellen des Anschlagringes 6 verändern. Man kann aber auch den Schwenkarm umdrehen und die Hülse 9 des Schwenkarmes auf das Standrohr 4 stecken und in die Hülse 7 den Drehzapfen 19 der Abziehführung einsetzen, dies u. U. in Verbindung mit dem erwähnten zusätzlichen längeren Standrohr.

Zum leichteren Transport, beispielsweise im Kofferraum eines PKW, läßt sich die beschriebene Abwickelvorrichtung durch einfaches Auseinandernehmen in die Einzelteile zerlegen. Andererseits ist eine Arretierung der Steckteile in der Weise vorgesehen, daß Querbohrungen 34 und 35 vorgesehen sind, welche das Standrohr 4 und die Achse 10 bzw. die Einsteckhülse 3 und das Standrohr 4 durchsetzen. Steckt man zwei Stifte durch diese Bohrungen, so kann die Vorrichtung am Ring 13 bequem angehoben werden.

Die beschriebene Vorrichtung eignet sich zum Abwickeln von Kabelringen und Kabeltrommeln aller bei der Elektroinstallation gängigen Leitungsquerschnitte. Darüber hinaus kann die Vorrichtung aber auch beim Einziehen mehrerer einzelner Leitungsdrähte von Nutzen sein. Dazu nimmt man am besten den Rollenträger ab und legt ein Abdeckblech auf das untere Speichenrad 1, 2. Darauf legt man die benötigten Leitungsringe (d. h. auf das Grundgestell) und faßt die aus der Mitte der Ringe abzuziehenden Drähte im Führungsrohr 20 zusammen. Dabei hält das Meßwerk die Länge der gemeinsam abgezogenen Drähte fest.

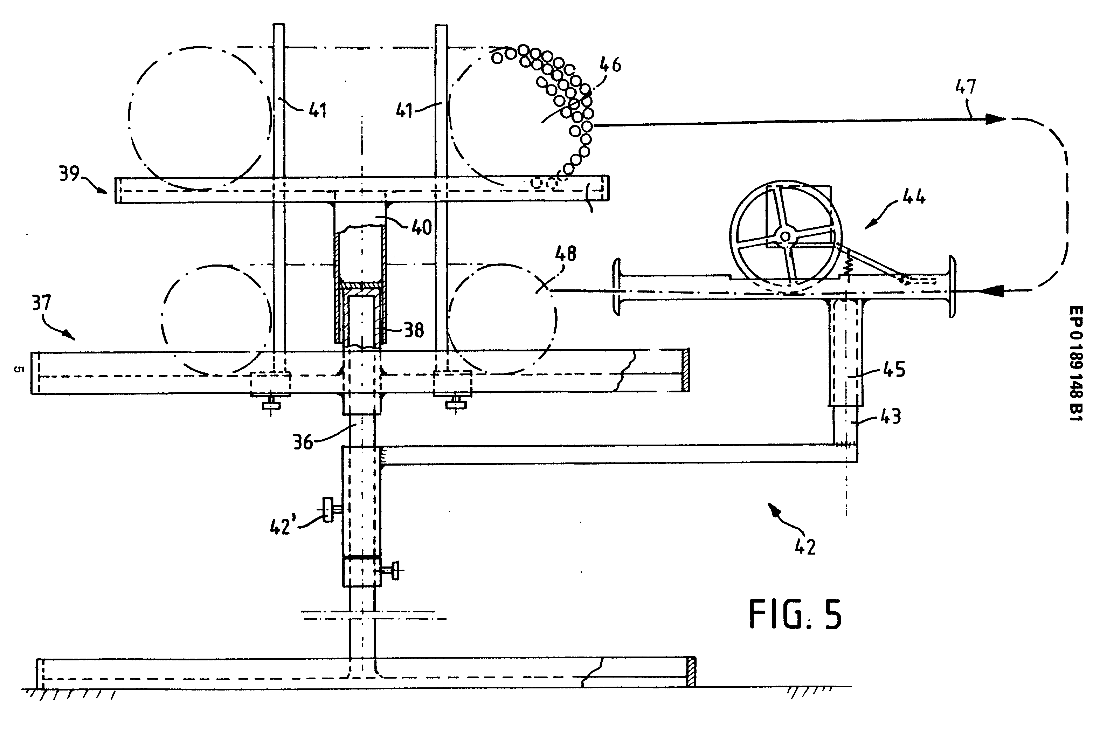

Bei dem Ausführungsbeispiel nach Fig. 5 hat der ebenfalls als Speichenrad ausgebildete Fuß einen Mast 36, welcher die Rollenträgerachse bildet. Ein unterer Rollenträger 37 weist eine hülsenförmige Nabe 38 auf, die oben geschlossen und über dem Mast 36 gestülpt ist, so daß sich der Rollenträger 37 frei drehen kann. Ein oberer Rollenträger 39 von etwas kleinerem Durchmesser ist mit seiner unten offenen Nabe 40 auf die Nabe 38 aufgesteckt. An den Speichen des unteren Rollenträgers 37 verschiebbar und arretierbar angebrachte Haltedorne 41 stehen nach oben und greifen zwischen den Speichen des oberen Rollenträgers 39 hindurch.

Ein Schwenkgestell 42 ist um den Mast 36 herum frei drehbar gelagert, jedoch mit Hilfe einer Klemmschraube 42' arretierbar. Es hat am äußeren Ende im Gegensatz zum vorhergehenden Beispiel einen vertikalen Drehzapfen 43. Dieser bildet die Drehachse einer Abziehführung 44, die sich von derjenigen des vorhergehenden Beispiels nur dadurch unterscheidet, daß sie an Stelle eines Zapfens eine Drehhülse 45 aufweist, die über den Drehzapfen 43 gesteckt ist. Es ist zu beachten, daß die Abziehführung 44 im Vergleich zum vorhergehenden Beispiel um 180° herum gedreht ist, so daß der längere Abschnitt des Führungsrohres den Rollenträgern zugewandt ist und zwar in Arbeitshöhe des unteren Rollenträgers.

Mit der beschriebenen Vorrichtung wird wie folgt gearbeitet: Zunächst legt man einen Kabelring 46, dessen Länge gemessen werden soll, auf den oberen Rollenträger 39, zentriert ihn mit Hilfe der Haltedorne 41 und macht das innen liegende Kabelende an einem Haltedorn fest. Nun wird der Kabelanfang ein Stück weit abgezogen, so daß sich eine mehrere Meter lange Schleife ergibt und dann steckt man den Kabelanfang in Pfeilrichtung durch das Führungsrohr der Abziehvorrichtung und macht ihn an einem der Haltedorne 41 oberhalb des unteren Rollenträgers 37 fest. Schließlich wird die Klemmschraube 42' angezogen, um das Schwenkgestell 42 an einer Drehung um den Mast 36 zu hindern. Zieht man nun das Kabel in Richtung des Pfeiles 47 vom Kabelring 46 ab, so wird dadurch über die Haltedorne 41 der untere Rollenträger 37 in gleicher Drehrichtung mitgenommen.

Das hat zur Folge, daß sich das Kabel auf dem unteren Rollenträger 37 zu einem neuen Kabelring 48 aufwickelt, wobei die Länge des auflaufenden Kabels mit Hilfe des Meßwerks der als Aufrollführung in umgekehrter Richtung arbeitenden Abziehführung 44 erfaßt wird. Das Führungsrohr der Abziehvorrichtung kann um den Drehzapfen 43 pendeln und stellt sich somit unabhäng vom jeweils erreichten Durchmesser des aufnehmenden Kabelrings 48 ziemlich genau tangential zu diesem ein.

Dadurch vermeidet man praktisch jede biegende und reibende Beanspruchung des Kabels in der Abziehführung. Während des Umwickelvorgangs vergrößert sich die Kabelschleife zwischen den beiden Rollenträgern 37 und 39, da anfangs der Durchmesser des abnehmenden Kabelrings 46 größer ist als der des aufnehmenden Kabelrings 48. Gegen Ende des Umwickelvorgangs, wenn sich diese Durchmesserverhältnisse umkehren, wird die Kabelschleife wieder abgebaut. Zum Schluß kann der Kabelring 48 abgenommen und die Gesamtlänge des Kabels am Zählwerk der Meßvorrichtung abgelesen werden. Alternativ könnte man auch die Abziehvorrichtung 44 höher setzen und in der Anordnung wie beim ersten Ausführungsbeispiel das abgezogene Kabel messen. Dadurch würde jedoch infolge des Fehlens einer Aufrollführung der Aufwickelvorgang erschwert

Schließlich ist es auch möglich, die Vorrichtung nach Fig. 5 zum wahlweisen Abwickeln zweier Rillen, beispielsweise von Kabeln unterschiedlicher Adernzahl, zu verwenden. Eine Rolle liegt auf dem oberen, eine auf dem unteren Rollenträger, die Klemmschraube 42' ist gelöst, die Abziehvorrichtung um 180° geschwenkt. Der Drehzapfen 43 muß in diesem Fall länger und der Schwenkarm 42 tiefer eingestellt sein. Will man von der oberen Rolle abziehen, so braucht nur der Schwenkarm mit Hilfe des Anschlagrings am Mast 36 höher gestellt zu werden.

Außer dem geschilderten Anwendungsfall in der Elektroinstallation ist die beschriebene Abwickelvorrichtung auch für alle anderen zugstrangartigen Materialien verwendbar. So beispielsweise zum Abziehen von Drähten bei der Herstellung von Zäunen oder für Spanndrähte im Weinbau. Auch in Fertigungsbetrieben müssen häufig Schläuche oder Kunststoffstränge stückweise abgerollt werden.

## Patentansprüche

1. Abwickelvorrichtung für in Rollenform vorliegendes Strangmaterial, insbesondere für isolierte elektrische Leitungen zur Gebäudeinstallation, bestehend aus einem Grundgestell, einem an diesem um eine vertikale Achse drehbar gelagerten Rollenträger und einer vorzugsweise mit einem Längenmeßwerk versehenen Abziehführung, dadurch gekennzeichnet, daß die Abziehführung (19, 20) an einem um den Rollenträger (13, 14) herum beweglichen Schwenkgestell (7, 8, 9) um eine vertikale Achse drehbar gelagert ist.

2. Abwickelvorrichtung nach Anspruch 1, dadurch gekennzeichnet, daß das Schwenkgestell ein um die Achse des Rollenträgers (13, 14) frei drehbarer, höhenverstellbarer Arm (8) ist.

3. Abwickelvorrichtung nach Anspruch 1, dadurch gekennzeichnet, daß die Abziehführung bezüglich des Schwenkgestells höhenverstellbar ist.

4. Abwickelvorrichtung nach Anspruch 1, dadurch gekennzeichnet, daß der Rollenträger ein Speichenrad ist, an dessen Speichen (14) Haltedorne (17) längsverschiebbar und in die Speichenradebene umklappbar angeordnet sind.

5. Abwickelvorrichtung nach Anspruch 1, dadurch gekennzeichnet, daß eine Bremse (27 bis 31) für den Rollenträger (13, 14) vorgesehen ist, die ein zentral nach oben stehendes Spannorgan (32, 33) aufweist.

6. Abwickelvorrichtung nach einem der vorhergehenden Ansprüche, dadurch gekennzeichnet, daß das Grundgestell einen ringförmigen Standfuß (1) aufweist.

7. Abwickelvorrichtung nach Anspruch 4, dadurch gekennzeichnet, daß an einem der Haltedorne ein Drehgriff angeordnet ist.

8. Abwickelvorrichtung nach Anspruch 1, dadurch gekennzeichnet, daß die Abziehführung ein quer zu ihrer Achse (19) stehendes Rohrstück (20) o. dgl. ist, dessen zu beiden Seiten der Achse (19) liegende Abschnitte ungleich lang sind.

9. Abwickelvorrichtung nach Anspruch 1, dadurch gekennzeichnet, daß über dem Rollenträger (37) ein oberer Rollenträger (39) achsgleich angeordnet ist und daß beide Rollenträger (37, 39) miteinander gekuppelt sind.

10. Abwickelvorrichtung nach Anspruch 9, dadurch gekennzeichnet, daß der obere Rollenträger (39) als Speichenrad ausgebildet und auf die Nabe (38) des unteren Rollenträgers (37) aufsetzbar ist.

11. Abwickelvorrichtung nach Anspruch 9, dadurch gekennzeichnet, daß die Haltedorne (41) des unteren Rollenträgers (37) den oberen Rollenträger (39) axial durchsetzen.

## Claims

1. Uncoiling device for continuous length material present in coil form, especially for insulated electric conductors for building installation, consisting of a base frame, a coil carrier mounted rotatably about a vertical axis thereon and a withdrawal guide preferably provided with a length-measuring mechanism, characterised in that the withdrawal guide (19, 20) is mounted rotatably about a vertical axis on a pivot frame (7, 8, 9) which is movable around the coil carrier (13, 14).

2. Uncoiling device according to Claim 1, characterised in that the pivot frame is a vertically displaceable arm (8) freely rotatable about the axis of the coil carrier (13, 14).

3. Uncoiling device according to Claim 1, characterised in that the withdrawal guide is vertically displaceable in relation to the pivot frame.

4. Uncoiling device according to Claim 1, characterised in that the coil carrier is a spoked wheel on the spokes (14) of which retaining pegs (17) are arranged longitudinally movably and for hinging over into the plane of the spoked wheel.

5. Uncoiling device according to Claim 1, characterised in that a brake (27 to 31) is provided for the coil carrier (13, 14) and comprises a centrally upwardly standing tightening element (32, 33).

6. Uncoiling device according to one of the preceding Claims, characterised in that the base frame comprises an annular standing foot (1).

7. Uncoiling device according to Claim 4, characterised in that a twist grip is arranged on one of the retaining pegs.

8. Uncoiling device according to Claim 1, characterised in that the withdrawal guide is a piece (20) of tube standing transversely of its axis (19), of which piece the sections lying to both sides of the axis (19) are of unequal lengths.

9. Uncoiling device according to Claim 1, characterised in that an upper coil carrier (39) is arranged coaxially above the coil carrier (37) and in that the two coil carriers (37, 39) are coupled with one another.

10. Uncoiling device according to Claim 9, characterised in that the upper coil carrier (39) is formed as a spoked wheel and is settable on to the hub (38) of the lower coil carrier (37).

11. Uncoiling device according to Claim 9, characterised in that the retaining pegs (41) of the lower coil carrier (37) axially penetrate the upper coil carrier (39).

**Revendications**

1. Dispositif dérouleur pour matière en cordon en forme de bobine, en particulier pour des lignes électriques à installer dans des bâtiments, constitué d'un bâti de base, d'un support de rouleau monté rotatif autour d'un axe vertical sur celui-ci et d'un guide de traction muni de préférence d'un élément de mesure de longueur, caractérisé en ce que le guide de traction (19, 20) est monté rotatif autour d'un axe vertical sur un bâti pivotant (7, 8, 9) mobile autour du support de rouleau (13, 14).

2. Dispositif dérouleur selon la revendication 1, caractérisé en ce que le bâti pivotant est un bras (8) réglable en hauteur, librement rotatif autour de l'axe du support de rouleau (13, 14).

3. Dispositif dérouleur selon la revendication 1, caractérisé en ce que le guide de traction est réglable en hauteur par rapport au bâti pivotant.

4. Dispositif dérouleur selon la revendication 1, caractérisé en ce que le support de rouleau est une roue à rayons, sur les rayons (14) de laquelle sont disposés, de façon déplaçable longitudinalement et basculable dans le plan de la roue à rayons, des broches d'arrêt (17).

5. Dispositif dérouleur selon la revendication 1, caractérisé en ce qu'un frein (27 à 31) est prévu pour le support de rouleau (13, 14), frein qui présente un organe de tension (32, 33) s'étendant centralement vers le haut.

6. Dispositif dérouleur selon l'une des revendications précédentes, caractérisé en ce que le bâti de base présente un pied de support annulaire (1).

7. Dispositif dérouleur selon la revendication 4, caractérisé en ce que, sur une des broches d'arrêt, est disposée une poignée tournante.

8. Dispositif dérouleur selon la revendication 1, caractérisé en ce que le guide de traction est une pièce tubulaire (20) ou analogue s'étendant transversalement à son axe (19), dont les tronçons se trouvant des deux côtés de l'axe (19) sont de longueurs différentes.

9. Dispositif dérouleur selon la revendication 1, caractérisé en ce que, sur le support de rouleau (37), est disposé un support de rouleau supérieur (39) de même axe, et en ce que les deux supports de rouleau (37, 39) sont couplés l'un à l'autre.

10. Dispositif dérouleur selon la revendication 9, caractérisé en ce que le support de rouleau supérieur (39) est réalisé sous forme de roue à rayons, et peut être monté sur le moyeu (38) du support de rouleau inférieur (37).

11. Dispositif dérouleur selon la revendication 9, caractérisé en ce que les broches d'arrêt (41) du support de rouleau inférieur (37) traversent axialement le support de rouleau supérieur (39).

FIG.2

18

8

17

32 33

17'

17

17

14

13

19 22 20 21

24

23

FIG.3

32
33
31
30
29
28
27
26
10 11
17
IV
13
14 26
16 12
IV

EP 0 189 148 B1

FIG. 1

FIG. 4

EP 0 189 148 B1

FIG. 5

EP 0 189 148 B1